# EUROPÄISCHE PATENTSCHRIFT

(11) **EP 0 970 266 B1**
(45) Veröffentlichungstag und Bekanntmachung des Hinweises auf die Patenterteilung: **12.06.2002**
(21) Anmeldenummer: 98913739.3
(22) Anmeldetag: 28.03.1998
(51) Int. Cl.: C25D 17/08, B65G 49/04

(54) **VORRICHTUNG ZUM OBERFLÄCHENBEHANDELN DURCH TAUCHEN**
DEVICE FOR SURFACE TREATMENT BY IMMERSION
DISPOSITIF POUR LE TRAITEMENT DE SURFACE PAR IMMERSION

(30) Priorität: 28.03.1997 DE 19713203
(43) Veröffentlichungstag der Anmeldung: 12.01.2000
(73) Patentinhaber: Nütro Maschinen- und Anlagenbau GmbH & Co. KG, 91275 Auerbach (DE); Walter Hillebrand GmbH & Co. Galvanotechnik, 58739 Wickede/Ruhr (DE)
(72) Erfinder: BRENDEL, Gerhard, D-91275 Auerbach (DE); FUCHS, Rudolf, D-90403 Nürnberg (DE); HILLEBRAND, Ernst-Walter, D-58739 Wickede (DE)
(74) Vertreter: König, Reimar, Dr.-Ing.
(86) Internationale Anmeldenummer: EP9801832
(87) Internationale Veröffentlichungsnummer: WO9844170

(56) Entgegenhaltungen:
- DE-A- 4 428 789
- GB-A- 2 089 838
- US-A- 4 331 230

## Beschreibung

Die Erfindung bezieht sich auf eine Vorrichtung und ein Verfahren zum Oberflächenbehandeln, bei dem das Behandlungsgut durch ein Bad geführt und dort chemisch, galvanisch und/oder elektrophoretisch behandelt wird.

Verfahren und Vorrichtungen dieser Art dienen dazu, Gegenstände, die zumindest teilweise aus einem leitfähigen Werkstoff bestehen, mit einer Oberfläche zu versehen, deren technischen oder optischen Eigenschaften auf den speziellen Verwendungszweck abgestellt sind. Dies kann durch chemische oder elektrochemische Behandlung der Oberfläche, beispielsweise Chromatieren der Oberfläche eines metallischen Werkstücks sowie durch elektrolytisches oder elektrophoretisches Aufbringen einer Deckschicht geschehen.

Die bekannten Naßverfahren sind sehr aufwendig, weil das Behandlungsgut durch eine Reihe von hintereinander angeordneten Behältern mit den verschiedensten Behandlungsflüssigkeiten, beispielsweise Reinigungsmittel, Elektrolyte und Elektrotauchlacke geführt werden muß. Dies geschieht diskontinuierlich durch Tauchen einzelner Gegenstände oder Portionen von Kleinteilen oder in Durchlaufanlagen mit Förderern, die das Behandlungsgut einzeln oder, wenn es sich um Kleinteile handelt, in Reihe nacheinander von Tauchbecken zu Tauchbecken durch eine Behandlungslinie bewegen. Hierfür eignet sich beispielsweise ein Förderer, der das Behandlungsgut aufnimmt. Eine entsprechende Vorrichtung ist aus der deutschen Patentschrift 41 42 997 bekannt.

Da es sich bei der chemischen Oberflächenbehandlung sowie beim elektrolytischen und beim elektrophoretischen Beschichten um einen zeitabhängigen Vorgang handelt, ist in Abhängigkeit von dem jeweiligen Behandlungsmittel und dem Behandlungsgut eine bestimmte Verweilzeit des Behandlungsguts in den einzelnen Tauchbecken erforderlich. Diese im Einzelfall sehr unterschiedliche Verweilzeit bestimmt bei gegebener Förder- bzw. Durchlaufgeschwindigkeit die notwendige Behandlungsstrecke und demgemäß die Abmessungen der einzelnen Tauchbecken in Transportrichtung.

Weil großstückiges Behandlungsgut einzeln und Kleinteile im Hinblick auf eine homogene Oberfläche nur mit begrenzter Schütthöhe durch die einzelnen Bäder geführt werden können, sind herkömmliche Anlagen außerordentlich aufwendig und besitzen einen verhältnismäßig geringen Durchsatz.

Ein besonderes Problem besteht darin, eine in allen Teilen gleichmäßige Oberflächenbehandlung, beispielsweise ein vollflächiges Galvanisieren und/oder Lackieren ohne Fehlstellen zu erreichen. Derartige Fehlstellen ergeben sich insbesondere an den Berührungspunkten zwischen dem Behandlungsgut und den Fördermitteln für den Transport des Behandlungsgutes durch die einzelnen Bäder. Als Transportmittel kommen insbesondere für Kleinteile bzw. Schüttgut Trommeln, teilweise aber auch Transportbänder und für größere Teile spezielle Transportgestelle in Frage, die entsprechend der Konfiguration des Behandlungsgut gestaltet und daher teuer sind.

Auch mittlere und große Teile lassen sich mit Hilfe eines Förderbandes durch die einzelnen Tauchbehälter bewegen; in diesem Falle müssen die Teile jedoch hintereinanderliegend auf dem Förderer angeordnet sein, um ihre Oberfläche für das Behandlungsmittel weitestgehend zugänglich zu machen. Eine derartige Anordnung in einer Ebene ist jedoch mit dem Nachteil verbunden, daß sich der Durchsatz im Vergleich zu einem Gestelltransport mit in gewissen Grenzen übereinander angeordneten Teilen erheblich verringert.

Der Erfindung liegt daher das Problem zugrunde, die Wirtschaftlichkeit der bekannten Verfahren und Vorrichtungen ohne Beeinträchtigung der Oberflächenqualität des Behandlungsguts zu verbessern.

Die Lösung dieser Aufgabe wird in den Hauptansprüchen 1 und 11 näher bezeichnet. Sie basiert auf dem Gedanken, den Durchsatz bei gegebener Transportgeschwindigkeit in den einzelnen Tauchbecken dadurch zu vervielfachen, daß das Behandlungsgut in mehreren Ebenen übereinander durch die einzelnen Tauchbecken geführt wird. Dies kann mit Hilfe eines verfahrbaren Stufengestells geschehen, zwischen dessen Stufen nach dem gleichen Raster in mehreren Ebenen angeordnete Behandlungselemente, beispielsweise stationäre Elektroden oder Düsen für Behandlungsflüssigkeit oder Trocknungsluft angeordnet sind.

Auf diese Weise wird das Behandlungsgut bei optimaler Zugänglichkeit seiner Oberfläche an den stationären Behandlungselementen vorbeigeführt und der Durchsatz entsprechend der Zahl der Transportebenen bzw. Stufen erhöht.

Das erfindungsgemäße Verfahren eröffnet zudem die Möglichkeit, das Behandlungsgut von oben und von unten zu beaufschlagen, beispielsweise zu besprühen oder mit Trocknungsluft anzublasen. Des weiteren ergibt sich eine bessere Schichtdickenverteilung, da die Elektroden linear zum Behandlungsgut angeordnet sind.

Um eine möglichst gleichmäßige Oberfläche ohne Fehlstellen zu erreichen, kann das Behandlungsgut im Bad oder auch zwischen zwei Bädern umgelagert werden, um Berührungsstellen freizulegen und für das Behandlungsmittel zugänglich zu machen. Das Umlagern kann durch Rütteln, mit Hilfe von Magneten oder mit Hilfe eines Rechens geschehen, dessen Finger kammartig zwischen Stäbe oder Lamellen eines Trägers für das Behandlungsgut, beispielsweise einer Horde greift.

Zur Durchführung des erfindungsgemäßen Verfahrens eignet sich insbesondere eine Vorrichtung, bei der das Behandlungsgut liegend oder hängend mehretagig auf bzw. an dem Stufengestell eines Förderers angeordnet ist, der das Behandlungsgut zumindest durch einen Behälter, beispielsweise einen Tauchbehälter führt. Das Behandlungsgut befindet sich vorzugsweise auf einer Horde und kann von einem anliefernden Förderer, vorzugsweise einem Zwei-Strangförderer im Stufengestell abgelegt werden. Um die einzelnen Stufen bzw. Ebenen des Gestells beschicken zu können, besteht das Stufengestell vorzugsweise aus einem vertikal verfahrbaren Schlitten mit im Abstand voneinander angeordneten Tragarmen. Auf diese Weise lassen sich die Tragarme nacheinander in die Fördererebene bringen, um von dem Förderer beispielsweise eine Lamellen-Horde abzuheben und so zu übernehmen.

Der Hubschlitten seinerseits kann in einem horizontal verfahrbaren Gestellwagen geführt sein, der das Gestell durch den jeweiligen Beschichtungsbehälter bewegt.

Dadurch, daß das Behandlungsgut während des Beladens des Stufengestells nacheinander, d.h. zeitlich verzögert in das Tauchbad gelangt, ergeben sich keine Nachteile und insbesondere keine unterschiedlichen Verweilzeiten, wenn das Behandlungsgut in dieser Phase stromlos ist.

Das Behandlungsgut läßt sich auf diese Weise schonend in das Tauchbad einbringen, weil es dabei senkrecht nach unten bewegt und durch sein Gewicht unverrückbar auf seiner Unterlage gehalten wird.

Die Erfindung wird nachfolgend anhand eines in der Zeichnung dargestellten Ausführungsbeispiels des näheren erläutert. In der Zeichnung zeigen:
- Fig. 1: eine Draufsicht auf eine erfindungsgemäße Vorrichtung in schematischer Darstellung,
- Fig. 2: einen vertikalen Längsschnitt durch einen Tauchbehälter der Fig. 1,
- Fig. 3: eine Querschnittsansicht der Fig. 2,
- Fig. 4: eine Horde zum Transportieren des Behandlungsguts,
- Fig. 5: einen Schnitt nach der Linie IV-IV in Fig. 3,
- Fig. 6: die Seitenansicht einer Übergabestation mit einem Förderer und einem Greifer,
- Fig. 7: eine Draufsicht auf den Greifer der Fig. 6,

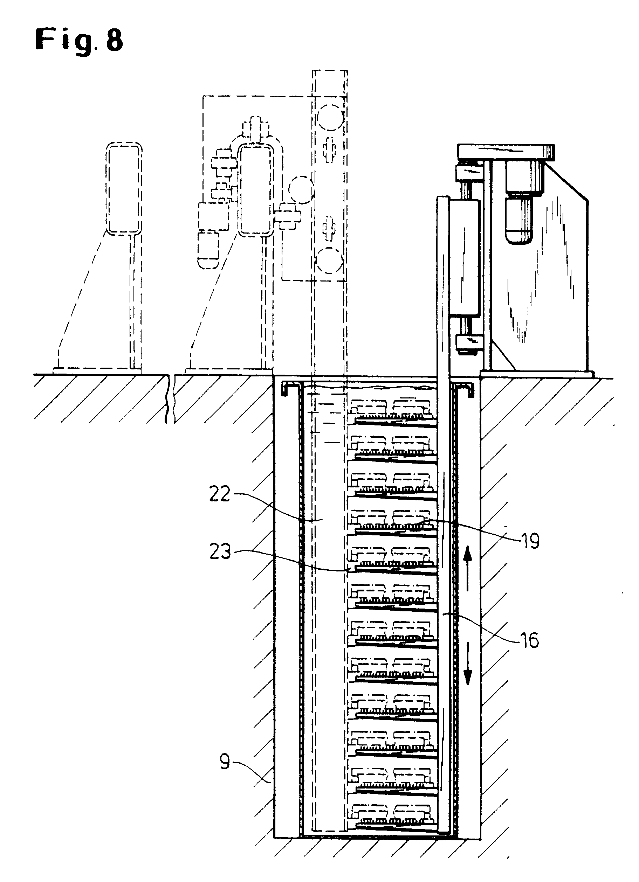

- Fig. 8: die Seitenansicht einer Umsetzstation,

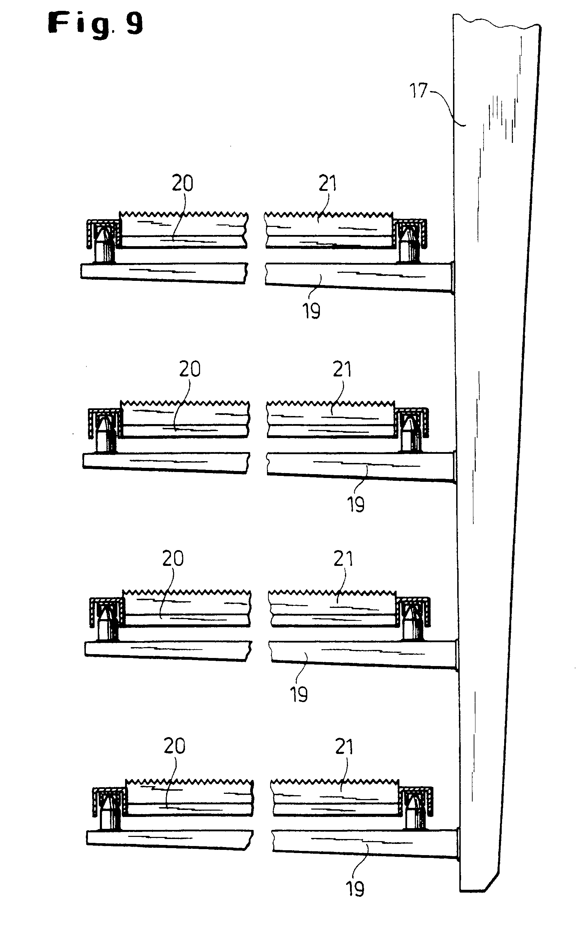

- Fig. 9: eine als Elektrode geschaltete Horde,

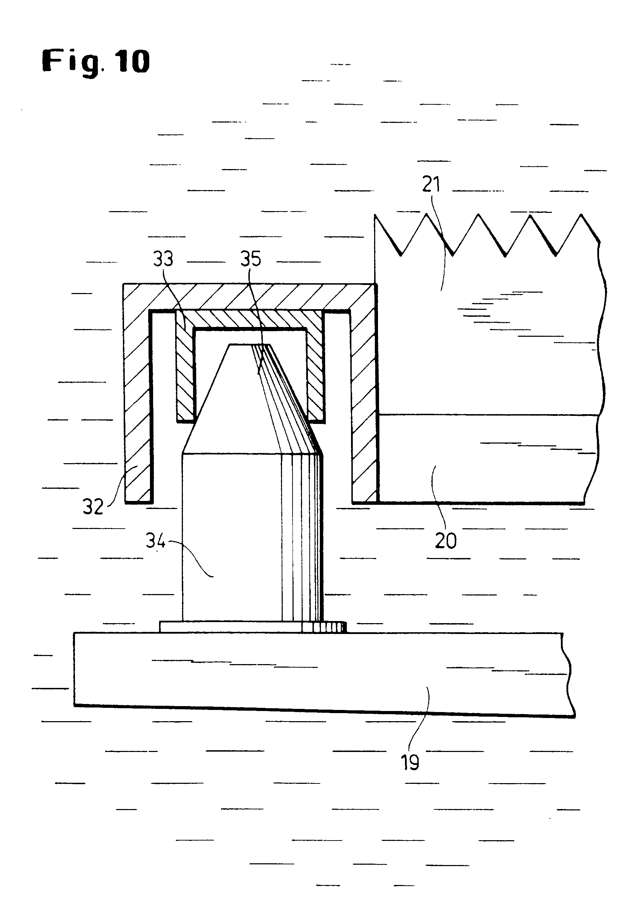

- Fig. 10: die vergrößerte Darstellung einer Kontaktstelle der Horde,
- Fig. 11: eine Gondel mit zwei Horden und
- Fig. 12: einen Schnitt nach der Linie XII - XII in Fig. 11.

Die Vorrichtung besteht im wesentlichen aus einem Tauchbehälter 1, einer Entladestation 2 mit einem Abförderer 3 und einem Querförderer 4, einer Rücklaufbahn 5, einem weiteren Querförderer 6 und einer Beladestation 7 mit einem Zuförderer 8.

Der Tauchbehälter 1 befindet sich in einem Trog 9 und ist mit in mehreren Ebenen übereinander stationär angeordneten Elektroden 10 ausgestattet. Der Tauchbehälter läßt an seinen Stirnseiten jeweils einen Bereich 11, 12 zum Einbringen und Herausnehmen des Behandlungsguts frei. Dort kann sich jeweils ein Sprühbad befinden. Neben dem Tauchbehälter 1 bzw. Trog 9 erstreckt sich in Längsrichtung eine Schiene 13, auf der mehrere jeweils mit einem Antrieb 14 versehene, im Querschnitt klauenartig ausgebildete Schlitten 15 geführt sind. In den Schlitten 15 sind vertikal verfahrbare Hub- bzw. Stufengestelle 16 geführt. Diese Gestelle bestehen im wesentlichen aus einem Rahmen mit zwei U-förmigen Schienen 17, in die am Schlitten 15 gelagerte angetriebene Rollen 18 eingreifen. Mit den Schienen 17 sind horizontale Tragarme 19 für Horden 20 verbunden.

Die Auflage der Horden 20 besteht aus einzelnen Stäben oder Lamellen 21, beispielsweise mit einem Sägezahnprofil, wie es in der deutschen Offenlegungsschrift 44 28 789 im einzelnen dargestellt ist.

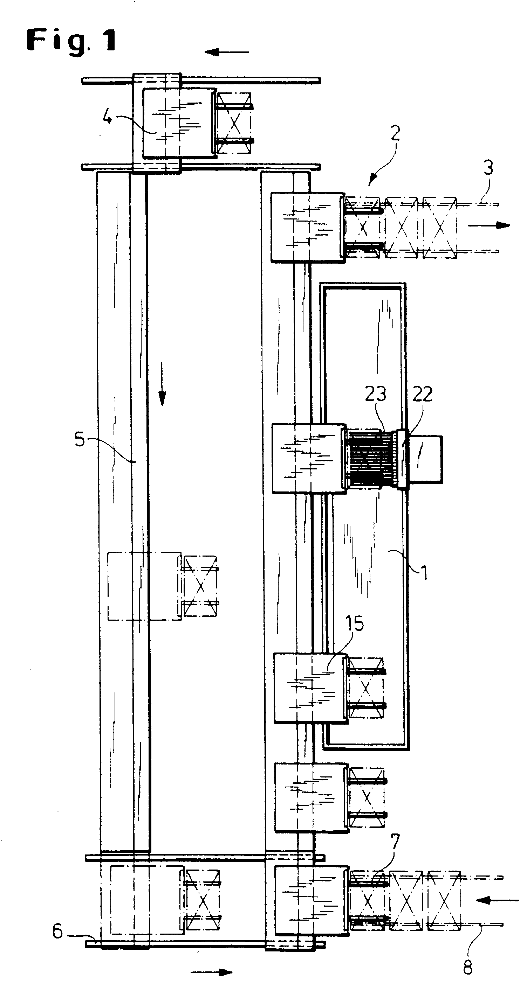

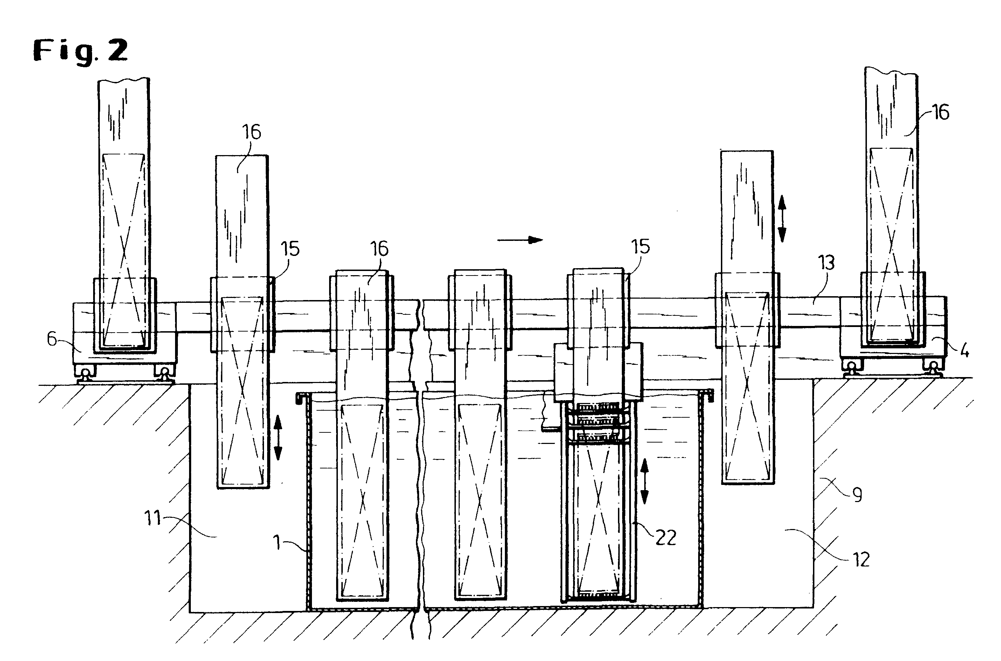

Fig. 2 zeigt in vereinfachter Darstellung in einer Querschnittsansicht von links in Fig. 1 das erste, noch nicht abgesenkte Hub- bzw. Stufengestell 16 und das dritte, völlig abgesenkte Hub- bzw. Stufengestell 16 im Tauchbehälter 1.

In dem Tauchbehälter 1 befindet sich ein Umlagerungsgestell 22 mit kammartig angeordneten vorkragenden Fingern 23, die in der gleichen Verteilung angeordnet sind wie die Stäbe bzw. Lamellen 21 der Horden 20 im Stufengestell 16. Mit diesen Fingern ist es möglich, das auf den Stäben bzw. Lamellen 21 der Horden 20 ruhende Behandlungsgut anzuheben und umzulagern, wenn die Stäbe 21 der Horden 20 einerseits und die Finger 23 des Umlagerungsgestells 22 andererseits auf Lücke einander gegenüberliegen.

Beim Absenken des Hubschlittens 17 bzw. der Tragarme 19 untergreifen die stationär angeordneten Finger das auf den Horden 20 befindliche Behandlungsgut, so daß die Horden mit Hilfe des Stufengestells 16 ohne Behandlungsgut ein kleines Stück seitlich verfahren werden können. Wird das Hubgestell dann wieder angehoben und gelangen dabei die Tragarme 19 bzw. die Horden 20 wieder in ihre vorherige Lage, dann befindet sich das Behandlungsgut wieder auf den Horden, jedoch mit anderen Berührungsstellen auf den Sägezahnlamellen.

Beim Beladen der Stufengestelle 16 werden die von dem Förderer 8 angelieferten Horden 20 nach und nach auf den Tragarmen 19 abgelegt, während sich das Stufengestell 16 schrittweise nach oben in den Beschickungsbereich bewegt. Dabei gelangen die Tragarme jeweils unter eine auf dem Förderer befindliche Horde und heben diese bei dem nächsten Bewegungsschritt von dem Förderer ab, während sich der Förderer um eine Palettenbreite vorwärts bewegt und die nächste Horde in die Übergabeposition bringt. Sobald sämtliche Tragarme 19 mit Horden belegt sind, fährt der Schlitten 15 das Stufengestell 16 über den Tauchbehälter. Nach dem Absenken und dem damit verbundenen Eintauchen des Stufengestells fährt der Schlitten 15 das Stufengestell 16 vorbei an den Elektroden 10 bis in die Umsetzstation. Dort verweilt das Stufengestell solange, wie erforderlich ist, um das Behandlungsgut mit Hilfe der Finger 23 des Hubgestells 22 anzuheben. Sobald dies geschehen ist, verfährt der Schlitten 15 das Stufengestell 16 um ein kleines Stück, das geringer ist als der Abstand zweier Hordenstäbe 21, wonach das Hubgestell 22 die Finger 23 wieder absenkt und die Finger dabei das Behandlungsgut wieder auf den Hordenstäben ablegen. Infolge der Relativbewegung zwischen dem auf den Fingern 23 liegenden Behandlungsgut und der Palette ergeben sich so neue Auflagepunkte, so daß die vorherigen Auflagepunkte für das Tauchbad zugänglich werden.

Nach dem Umsetzen fährt der Schlitten 15 das Stufengestell 16 im abgesenkten Zustand weiter entlang den Elektroden 10, bis zum anderen Ende des Tauchbehälters 1 bzw. nach einem Hochfahren bis über den Entnahmebereich 12. Dort bewegt sich das Stufengestell 16 im Abstand der Tragarme 19 schrittweise nach unten, wobei die Horden 20 auf dem Abförderer 3 abgelegt werden, während die Tragarme 19 in den Förderer 3 eintauchen.

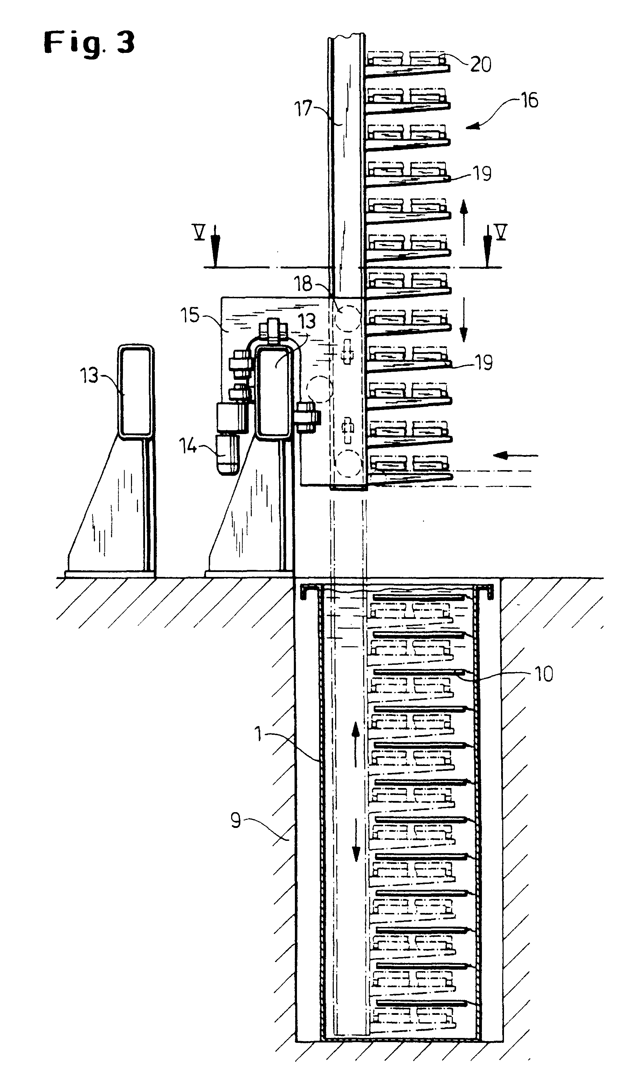

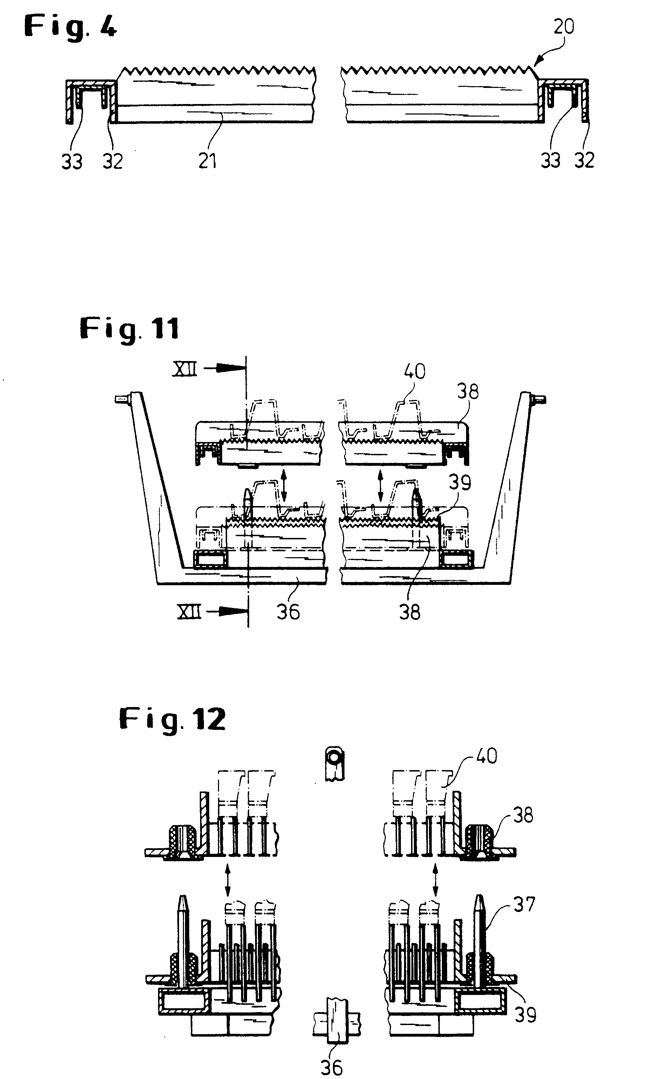

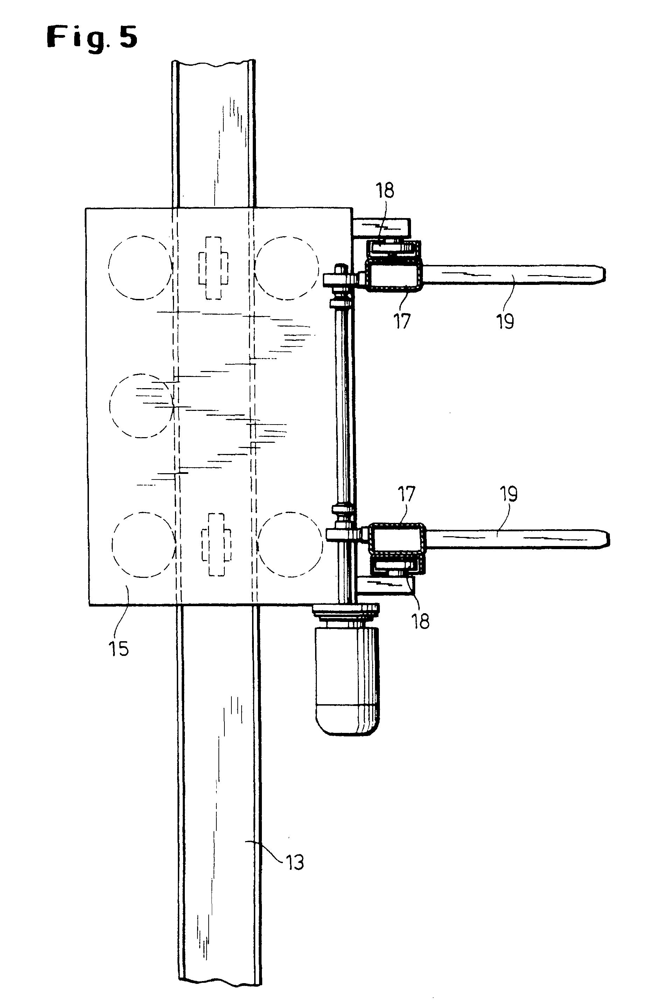

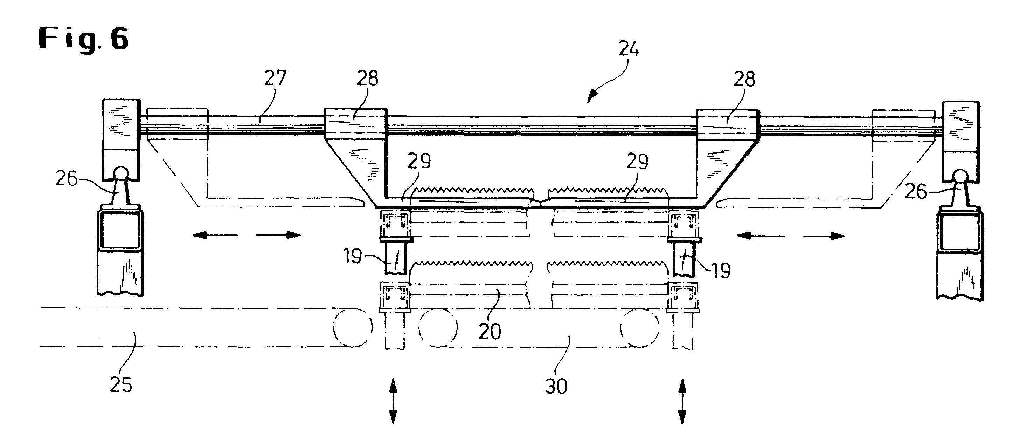

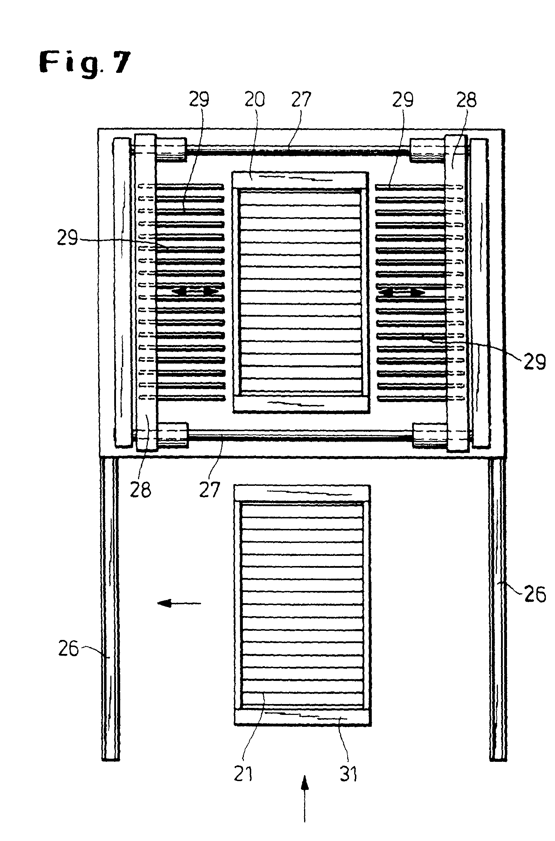

Ein Entnahmegreifer 24 bringt das Behandlungsgut auf andere Horden für die nächste Behandlungsstufe, bei der es sich um eine Spülstation handeln kann, der beispielsweise eine Chromatisierungsstufe und eine Station zum elektrophoretischen Beschichten mit löslichen oder unlöslichen Anoden nachgeschaltet ist. Diese Stationen unterscheiden sich von der in den Fig. 1 bis 7 dargestellten Stationen zum galvanischen Beschichten im wesentlichen nur dadurch, daß sich in dem jeweiligen Tauchbehälter ein Material zum anodischen oder kathodischen Beschichten befindet.

Die Beschichtungsstation kann jedoch auch aus einer Vorrichtung bestehen, wie sie in der deutschen Offenlegungsschrift 44 28 789 beschrieben ist, deren Inhalt als Bestandteil dieser Beschreibung anzusehen ist. Da diese Vorrichtung ebenfalls mit Horden bzw. Paletten arbeitet, braucht das Behandlungsgut nur auf diese Horden bzw. Paletten umgesetzt zu werden, so daß beim Übergang von einer Verfahrensstufe in die nächste Verfahrensstufe kein personeller Aufwand erforderlich ist.

Zum Umsetzen dient ein Greifer 24, der zwischen einem horizontalen Hordenförderer 25 und der Beladestation des nächsten Tauchbehälters angeordnet ist. Der Greifer 24 besitzt einen nicht dargestellten Antrieb und ist auf Schienen 26 zwischen dem Förderer 25 und dem Tauchbehälter in Längsrichtung des Förderers verfahrbar; er ist mit zwei angetriebenen Spindeln 27 versehen, auf denen einander gegenüberliegend Brücken 28 mit Tragarmen 29 angeordnet sind. Die Brücken 28 bewegen sich beim Drehen der Spindeln 27 aufeinander zu und untergreifen das Behandlungsgut der jeweils auf einem in Verlängerung des Förderers 25 angeordneten Hubtisch 30 befindlichen Horde 20. Beim Absenken des Hubtischs übernehmen die Tragarme das Behandlungsgut von der Horde 20. Durch seitliches Verfahren des Längsschlittens 28 wird das Behandlungsgut über eine Horde 31 für die nächste Behandlungsstufe gebracht, die sich ebenfalls auf einem in einen Förderer integrierten Hubtisch befindet. Beim Anheben des Hubtischs übernimmt die Horde 31 das Behandlungsgut von den Tragarmen 29 des Greifers 24. Bei einem Öffnen des Greifers und einem anschließenden Absenken des Hubtischs gelangt die Horde auf den Förderer und von dort in der im Zusammenhang mit Fig. 1 beschriebenen Weise in ein Stufengestell des nächsten Tauchbehälters oder auch in eine Hängebahn nach der deutschen Offenlegungsschrift 44 28 789. Die Horde übernimmt dann diejenigen Tragarme des an der Beschickungsseite des Tauchbehälters befindlichen Stufengestells, die etwas unterhalb der Bewegungsebene der Horde positioniert werden. Beim Hochfahren des Stufengestells um ein geringes Stück übernehmen die betreffenden Tragarme die Horde 20 von dem vom Greifer kommenden Förderer.

Um die Horden 20 als Elektroden schalten zu können, sind sie mit mindestens einer Kontaktkammer 32 ausgestattet. Die Kontaktkammern 32 sind nach unten offen und enthalten ebenfalls nach unten offene Kontakthülsen 33, in die Kontaktstifte 34 auf den Tragarmen 19 der Stufengestelle 16 eingreifen. Die Kontaktstifte besitzen eine kegelige Spitze 35, die mit der Innenkante der Kontakthülse einen linienförmigen Kontakt schafft. Auf diese Weise wird die Horde 20 mit dem auf den Spitzen der Lamellen 21 ruhenden Behandlungsgut als Elektrode geschaltet. Da die Beschichtungsmittellösung nur wenig in die Kontaktkammer eindringt, besteht nicht die Gefahr, daß die Kontaktstifte und die Kontakthülsen ebenfalls beschichtet werden und auf diese Weise der elektrische Kontakt verlorengeht.

Das Behandlungsgut kann auch mit Hilfe einer Hängebahn, wie sie in der deutschen Offenlegungsschrift 44 28 789 beschrieben ist, durch den Tauchbehälter geführt werden. Dabei kommt eine Gondel 36 zur Verwendung, die mit Zentrierstiften 37 versehen ist und zwei Horden 38,39 aufnimmt. Dabei handelt es sich um eine Galvanohorde 38 und eine Lackierhorde 39, die genau ineinanderpassen. Die Galvanohorde 38 ist gegenüber der Gondel 36 isoliert und unterliegt daher nicht der Gefahr einer Beschichtung. Nach dem Lackieren wird die Galvanohorde nach oben von den Zentrierstiften 37 abgezogen und das Behandlungsgut 40 erneut auf die Galvanohorde überführt.

Die Horden brauchen nicht mit Sägezahnlamellen ausgestaltet zu sein; es kommen auch andere Tragelemente in Frage, die eine möglichst geringe Berührungsfläche mit dem Behandlungsgut gewährleisten. Am günstigsten ist eine im wesentlichen punktförmige Berührung.

Die große Wirtschaftlichkeit des erfindungsgemäßen Verfahrens ergibt sich in erster Linie daraus, daß der Personalaufwand sehr gering und der Durchsatz im Vergleich zu einem mit herkömmlichen Transportvorrichtungen für das Behandlungsgut mit einer Transportebene arbeitenden Verfahren wesentlich größer ist. Hinzu kommt wegen der guten Zugänglichkeit des Behandlungsgutes für das Behandlungsmittel eine hohe Oberflächenqualität.

Die Erfindung eignet sich insbesondere für eine elektrochemische Oberflächenbehandlung, beispielsweise zum Aufbringen einer Zink-, Zink/Eisen- oder einer Zink/Nickel-Schicht, die anschließend chromatiert wird, wenn sich an das Chromatieren ein elektrophoretisches Beschichten anschließt. Auf diese Weise lassen sich Oberflächen sehr wirtschaftlich mit einer Metall/Lack-Beschichtung versehen.

## Patentansprüche

1. Vorrichtung zum Oberflächenbehandeln mit einem Tauchbehälter mit stationär angeordneten Behandlungselementen (10) und einem absenkbaren Stufengestellförderer (14,15,16), der das Behandlungsgut in mehreren Ebenen übereinander durch den Tauchbehälter an den zwischen die Stufen (19) des Stufengestellförderers ragenden Behandlungselementen vorbeiführt.

2. Vorrichtung nach Anspruch 1, **dadurch gekennzeichnet, daß** das Stufengestell (16) aus einem vertikal verfahrbaren Hubschlitten (17) mit im Abstand voneinander angeordneten Tragarmen (19) besteht.

3. Vorrichtung nach Anspruch 2, **dadurch gekennzeichnet, daß** der Hubschlitten (17) in einem horizontal verfahrbaren Schlitten (15) geführt ist.

4. Vorrichtung nach einem der Ansprüche 1 bis 3, **dadurch gekennzeichnet, daß** die Behandlungselemente aus Elektroden (10) bestehen und die Stufen (19) als Elektroden geschaltet sind.

5. Vorrichtung nach einem der Ansprüche 1 bis 4, **gekennzeichnet durch** einen Tauchbehälter (1) mit in vertikalem Abstand voneinander angeordneten vorkragenden Elektroden (10).

6. Vorrichtung nach einem der Ansprüche 1 bis 5, **gekennzeichnet durch** Behandlungsgutträger in Gestalt von Stäbe (21) aufweisenden Horden (20).

7. Vorrichtung nach Anspruch 6, **dadurch gekennzeichnet, daß** die Horden mit nach unten offenen Kontaktkammern (32) versehen sind.

8. Vorrichtung nach Anspruch 7, **dadurch gekennzeichnet, daß** in die Kontaktkammern (32) Kontaktstifte (34) eingreifen.

9. Vorrichtung nach Anspruch 8, **dadurch gekennzeichnet, daß** die Kontaktstifte (34) mit Kontakthülsen (33) in den Kontaktkammern (32) in Berührung stehen.

10. Vorrichtung nach einem der Ansprüche 6 bis 9, **dadurch gekennzeichnet, daß** in dem Tauchbehälter (1) ein Umlagerungsgestell (22) mit vorkragenden Fingern (23) angeordnet ist, deren Verteilung und Abstand voneinander der Verteilung und dem Abstand der Stäbe (21) aller in einem Stufengestell (16) angeordneten Horden (20) entspricht.

11. Verfahren zum Oberflächenbehandeln, bei dem
- das Behandlungsgut auf einem verfahrbaren Stufengestell (16) angeordnet ist und
- durch eine Behandlungszone (1) mit in mehreren Ebenen zwischen die Stufen (19) greifenden stationär angeordneten Behandlungselementen (10) bewegt wird.

12. Verfahren nach Anspruch 11, **dadurch gekennzeichnet, daß** das Behandlungsgut durch einen Elektrolyten bewegt wird.

13. Verfahren nach Anspruch 12, **dadurch gekennzeichnet, daß** das Behandlungsgut im Anschluß an die elektrolytische Behandlung elektrophoretisch beschichtet wird.

14. Verfahren nach einem der Ansprüche 11 bis 13, **dadurch gekennzeichnet, daß** das Behandlungsgut während des Durchlaufs umgelagert wird.

15. Verfahren nach einem der Ansprüche 11 bis 13, **dadurch gekennzeichnet, daß** das Behandlungsgut zwischen zwei Durchläufen umgeschichtet wird.

## Claims

1. Apparatus for surface treatment with a dip tank, having stationary treatment elements (10) and a lowerable tiered-rack conveyor (14, 15, 16) which directs the material to be treated in a plurality of planes one above the other through the dip tank past treatment elements projecting between the tiers (19) of the tiered-rack conveyor.

2. Apparatus according to Claim 1, **characterized in that** the tiered rack (16) consists of a vertically movable lifting slide (17) having supporting arms (19) arranged at a distance from one another.

3. Apparatus according to Claim 2, **characterized in that** the lifting slide (17) is guided in a horizontally movable slide (15).

4. Apparatus according to one of Claims 1 to 3, **characterized in that** the treatment elements consist of electrodes (10) and the tiers (19) are connected as electrodes.

5. Apparatus according to one of Claims 1 to 4, **characterized by** a dip tank (1) having projecting electrodes (10) arranged at a distance one above the other.

6. Apparatus according to one of Claims 1 to 5, **characterized by** carriers for the material to be treated which are in the form of hurdles (20) having bars (21).

7. Apparatus according to Claim 6, **characterized in that** the hurdles are provided with contact chambers (32) open at the bottom.

8. Apparatus according to Claim 7, **characterized in that** contact pins (34) engage in the contact chambers (32).

9. Apparatus according to Claim 8, **characterized in that** the contact pins (34) are in contact with contact sleeves (33) in the contact chambers (32).

10. Apparatus according to one of Claims 6 to 9, **characterized in that** a rearranging rack (22) with projecting fingers (23) is arranged in the dip tank (1), the distribution and distance apart of which fingers (23) corresponds to the distribution and distance apart of the bars (21) of all the hurdles (20) arranged in the tiered rack (16).

11. Method for surface treatment, in which
- the material to be treated is arranged on a movable tiered rack (16), and
- is moved through a treatment zone (1) having stationary treatment elements (10) engaging in a plurality of planes between the tiers (19).

12. Method according to Claim 11, **characterized in that** the material to be treated is moved through an electrolyte.

13. Method according to Claim 12, **characterized in that** the material to be treated is coated electrophoretically following the electrolytic treatment.

14. Method according to one of Claims 11 to 13, **characterized in that** the material to be treated is rearranged during the pass.

15. Method according to one of Claims 11 to 13, **characterized in that** the material to be treated is rearranged between two passes.

## Revendications

1. Dispositif pour le traitement de surfaces avec une cuve à immersion munie d'éléments de traitement (10) placés de manière stationnaire et d'un convoyeur par cages à étages (14, 15, 16) abaissable qui passe la matière à traiter dans plusieurs niveaux superposés dans la cuve à immersion devant les éléments de traitement s'étendant entre les étages (19) du convoyeur par cages à étages.

2. Dispositif selon la revendication 1, **caractérisé en ce que** le châssis à étages (16) est constitué d'un chariot élévateur (17) déplaçable verticalement avec des bras de support (19) placés à intervalle l'un de l'autre.

3. Dispositif selon la revendication 2, **caractérisé en ce que** le chariot élévateur (17) est guidé dans un chariot (15) déplaçable horizontalement.

4. Dispositif selon l'une des revendications 1 à 3, **caractérisé en ce que** les éléments de traitement sont constitués d'électrodes (10) et que les étages (19) sont commutés comme des électrodes.

5. Dispositif selon l'une des revendications 1 à 4, **caractérisé par** une cuve à immersion (1) munie d'électrodes (10) saillantes placées verticalement à intervalles l'une de l'autre.

6. Dispositif selon l'une des revendications 1 à 5, **caractérisé par** des claies (20) présentant des supports de matière à traiter réalisés sous forme de barres (21).

7. Dispositif selon la revendication 6, **caractérisé en ce que** les claies sont munies de chambres de contact (32) ouvertes vers le bas.

8. Dispositif selon la revendication 7, **caractérisé en ce que** des fiches de contact (34) ont prise dans les chambres de contact (32).

9. Dispositif selon la revendication 8, **caractérisé en ce que** les fiches de contact (34) sont en contact avec des connecteurs femelles (33) dans les chambres de contact (32).

10. Dispositif selon l'une des revendications 6 à 9, **caractérisé en ce qu**'un châssis de transposition (22) avec des doigts saillants (23) est placé dans la cuve à immersion (1), doigts dont la disposition et l'écart l'un par rapport à l'autre correspond à la disposition et à l'écart des barres (21) de toutes les claies (20) placées dans un châssis à étages (16).

11. Procédé pour le traitement de surfaces dans le cas duquel
- la matière à traiter est placée sur un châssis à étages (16) déplaçable et
- est déplacée dans une zone de traitement (1) avec des éléments de traitement (10) placés de manière stationnaire dans plusieurs niveaux, ayant prise entre les étages (19).

12. Procédé selon la revendication 11, **caractérisé en ce que** la matière à traiter est déplacée par un électrolyte.

13. Procédé selon la revendication 12, **caractérisé en ce que** la matière à traiter est enduite de manière électrophorétique successivement au traitement électrolytique.

14. Procédé selon l'une des revendications 11 à 13, **caractérisé en ce que** la matière à traiter est transposée pendant le passage.

15. Procédé selon la revendication 11 à 13, **caractérisé en ce que** la matière à traiter est modifiée entre deux passages.
